# EUROPÄISCHE PATENTSCHRIFT

(11) **EP 3 435 096 B1**
(45) Veröffentlichungstag und Bekanntmachung des Hinweises auf die Patenterteilung: **09.08.2023**
(21) Anmeldenummer: 18180879.1
(22) Anmeldetag: 29.06.2018
(51) Int. Cl.: G01P 13/04, G01P 3/487, B62M 6/50

(54) **VERFAHREN UND VORRICHTUNG ZUR ERFASSUNG DER DREHRICHTUNG EINES RADES**
METHOD AND DEVICE FOR DETECTING THE ROTATIONAL DIRECTION OF A WHEEL
PROCÉDÉ ET DISPOSITIF DE DÉTECTION DE LA DIRECTION DE ROTATION D'UNE ROUE

(30) Priorität: 27.07.2017 DE 102017212905
(43) Veröffentlichungstag der Anmeldung: 30.01.2019
(73) Patentinhaber: Robert Bosch GmbH, 70442 Stuttgart (DE)
(72) Erfinder: Stegmaier, Juergen, 72074 Tuebingen (DE); Schnee, Jan, 71093 Weil Im Schoenbuch (DE)

(56) Entgegenhaltungen:
- DE-C1- 19 701 927
- JP-A- 2014 160 009
- US-B2- 7 928 724
- US-B2- 9 267 800

## Beschreibung

Die Erfindung betrifft ein Verfahren sowie eine Vorrichtung zur Erfassung der Drehrichtung eines Zweirads, insbesondere eines Rades an einem Fahrrad, sowie ein mit dieser Vorrichtung ausgestattetes Zweirad.

### Stand der Technik

Zur berührungslosen Abstands- und Einbaulagenmessung von rotierenden Teilen werden sowohl optische als auch magnetische Sensoren verwendet. So erfolgt beispielsweise die Geschwindigkeitsmessung bei Fahrrädern während der Fahrt mittels magnetischer Raddrehzahlsensoren, bei dem die Drehung der Fahrradreifen erfasst wird. Dabei sind die Raddrehzahlsensoren als Magnetsensoren beispielsweise ortsfest an der Vorderradgabel vorgesehen, die bei jedem Durchlauf eines Magneten an der Speicher einen Impuls liefern.

Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden. Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr ungenau. Weiterhin besteht bei dieser Form der Geschwindigkeitserfassung sehr leicht die Möglichkeit einer Manipulation. Auch die Erfassung der Bewegungsrichtung des Rades ist alleine aus diesen Signalen nicht ableitbar, da sowohl eine Vorwärts- als auch eine Rückwärtsfahrt die gleichen Messsignale liefern würde.

Als Alternative können Beschleunigungssensoren verwendet werden, die ebenfalls eine Geschwindigkeitsinformation erzeugen können. Zusätzlich können durch derartige Beschleunigungssensoren auch die Bewegungsrichtungen erfasst werden, so dass eine Unterscheidung zwischen einer Vorwärtsfahrt und einer Rückwärtsfahrt erfolgen kann. Der Betrieb derartiger Beschleunigungssensoren ist jedoch energieaufwändiger, so dass diese Art der Erfassung eher bei elektrifizierten Fahrzeugen zum Einsatz kommt.

Mit der vorliegenden Erfindung wird ein System beschrieben, bei dem mittels der Erfassung von Sensorsignalen eines Magnetsensors auf die Einbaulage bzw. Orientierung eines Rades geschlossen werden kann.

### Offenbarung der Erfindung

Die Erfindung beansprucht mit den Merkmalen der unabhängigen Ansprüche ein Verfahren gemäß Anspruch 1 und eine Vorrichtung gemäß Anspruch 5 zur Bestimmung der Drehrichtung eines Rades an einem Zweirad sowie ein Zweirad, welches ein derartiges Verfahren ausführt, beispielsweise in einer Recheneinheit oder der Vorrichtung. Hierzu ist vorgesehen, dass an dem Rahmen des Zweirads ein Magnetfeldsensor gekoppelt ist, z.B. am oder im Rahmen oder einer rahmennahen Zweiradkomponenten angeordnet. Weiterhin ist vorgesehen, dass das Rad, dessen Drehrichtung bestimmt werden soll, einen Magneten aufweist, z.B. im oder am Reifenmantel oder an oder in der Felge. Zur Durchführung des erfindungsgemäßen Verfahrens bzw. zur Nutzung der erfindungsgemäßen Vorrichtung wird zunächst eine Information über die Bewegung des Zweirads erfasst. Anschließend werden in Abhängigkeit von der Kenntnis über die Bewegung des Zweirads erste Magnetfeldsensorsignale erfasst, die die Bewegung des Magneten an dem bewegten bzw. drehenden Rad repräsentieren. Zu einem späteren Zeitpunkt werden dann zweite Magnetfeldsensorsignale erfasst, unabhängig von der Vorlage der Information über die Bewegung des Zweirads. Aus dem Vergleich der ersten und zweiten Magnetfeldsensorsignale wird abschließend eine Information über die Drehrichtung des Rades gewonnen.

Diese Information kann im Folgenden für weitere Systeme zur Verfügung gestellt werden.

Durch das erfindungsgemäße Verfahren bzw. die erfindungsgemäß Vorrichtung kann auf einfache Weise die Bewegungsrichtung des Zweirads alleine aus einem einzelnen Magnetsignal abgeleitet werden, indem in einem ersten Schritt die Drehrichtung eingelernt wird.

Typischerweise wird bei der Erfassung der ersten und zweiten Magnetfeldsensorsignale eine zeitaufgelöste Erfassung durchgeführt, die wenigstens einen kompletten Durchlauf des Magneten am Magnetfeldsensor enthält.

Es ist vorgesehen, dass das Zweirad einen Motor aufweist, der wenigstens teilweise das Zweirad antreibt. In diesem Fall kann die Information über die Bewegung des Zweirads durch die Ansteuerung des Motors zum Antrieb in Vorwärtsrichtung oder Rückwärtsrichtung bereitgestellt werden. Somit ist den ersten Magnetfeldsensorsignalen eine bevorzugte Richtung der Bewegung zugeordnet, so dass mittels der zweiten Magnetfeldsensorsignale auf die Bewegungsrichtung und somit die Drehrichtung geschlossen werden kann.

Zur Erkennung der Bewegung und der Ableitung der Drehrichtung des bewegten bzw. rotierenden Rades reicht es aus, wenn der Magnetfeldsensor die Veränderung der Magnetfeldkomponenten in einer Richtung des Zweirads erfasst wird. Hierzu wird die Magnetfeldkomponente By in Richtung der Hochachse des Zweirads erfasst. Dies liegt darin begründet, dass die Bewegung des Magneten am oder im Rad im Wesentlichen in der Y-Richtung stattfindet. Denkbar ist jedoch gerade bei einer Anordnung des Magneten mit seiner Polarisation in Umfangsrichtung auch die zusätzliche Erfassung der Magnetfeldkomponenten Bx in Fahrtrichtung, um daraus die Drehrichtung abzuleiten.

Besonders vorteilhaft ist die Erfindung bei einer Ausgestaltung, bei der ein Verfahren oder ein System am Zweirad zusätzlich zur Drehrichtung eine Geschwindigkeit erfasst oder ableitet. So kann beispielsweise über eine weitere Erfassung des Magnetsignals oder eine zusätzliche Sensoreinheit die Geschwindigkeit erfasst werden. Zusammen mit der erfindungsgemäß ermittelten Information über die Drehrichtung des (Lauf-)Rads bzw. die Fortbewegungsrichtung des Zweirads können Strecken erfasst oder Komponenten am Zweirad in bestimmten Situation angesteuert werden. So ist denkbar, bei einer Rückwärtsfahrt Leuchtmittel am Zweirad anzusteuern oder die gefahrenen Kilometer bzw. die zurückgelegte Strecke nur bei einer Vorwärtsbewegung aufzuzeichnen. Darüber hinaus ist auch möglich, zusätzliche Sensorsignale, wie beispielsweise den Lenkwinkel nur bei Vorliegen einer vorbestimmten Bewegungsrichtung auszuwerten. Denkbar ist auch, z.B. die Schiebehilfe nur dann zu aktivieren, wenn eine Vorwärtsbewegung erkannt wird.

Optional ist auch vorstellbar, dass zusätzlich zur Drehrichtung aus den erfassten Magnetfeldsensorsignalen direkt die Drehgeschwindigkeit des überwachten Rades und gegebenenfalls mit der Kenntnis über den Radumfang daraus abgeleitet die Geschwindigkeit des Zweirads, zum Beispiel eines Elektrofahrrads ermittelt wird. Dies kann beispielsweise durch die Berücksichtigung der zeitlichen Abstände der Magnetfeldsensorsignale aufeinander folgender Magnetdurchläufe an dem Rad erfolgen. Falls an dem Rad nur ein Magnet vorhanden ist, wird ein vollständiger Umlauf benötigt, um die Geschwindigkeit ableiten zu können. Sind in dem überwachten Rad jedoch mehr Magnete angeordnet, kann in Abhängigkeit der Kenntnis der Anzahl und der Anbringung im Rad auch bei einer Teilumdrehung des Rades eine Drehgeschwindigkeit und/oder eine Zweirad-Geschwindigkeitsinformation abgleitet werden. Hierzu kann beispielsweise in der Auswerteeinheit zur Auswertung der Magnetfeldsensorsignale eine Datenbank mit der verwendeten Anzahl an Magneten, deren Anbringungsorte im Rad sowie dem Umfang hinterlegt sein. Optional oder zusätzlich kann auch vorgesehen sein, dass diese Datenbank durch den Fahrer des Zweirads bei der Bestückung des Rades mit den Magneten manuell über eine entsprechende Eingabe erzeugt wird.

Weiterhin ist möglich, zusätzlich zur Drehrichtung die Drehgeschwindigkeit des Rades und somit die Fortbewegungsgeschwindigkeit des Zweirads aus der Form oder der Magnetfeldstärke der Magnetfeldsensorsignale zu ermittelt. So ist denkbar, dass bei einer bekannten Länge des Magneten in Umfangsrichtung alleine aus dem Beginn und dem Ende der erfassbaren Magnetfeldsensorsignale auf die Geschwindigkeit geschlossen werden kann. Hierzu ist daher nur eine minimale Umdrehung des Rades notwendig. Werden beispielsweise zwei Magnete in Umfangsrichtung des Rades verwendet, lassen sich so vier Drehgeschwindigkeitsinformationen ableiten, jeweils zwei während der Erfassung der Magnetfeldsensorsignale und zwei durch den Abstand der erfassten Magnetfeldsensorsignale. Dieses Verfahren erlaubt eine schnelle Erfassung der Zweiradgeschwindigkeit, so dass auch kurzfristige Änderungen erkannt und für die Steuerung zum Beispiel eines Antriebs eines Elektrofahrrads verwendet werden können. Optional kann zur Erkennung der relevanten Zeitpunkte des Beginns und des Endes der Magnetfeldsensorsignale auch ein Schwellenwert verwendet werden, um eine einheitliche Messwerterfassung zu ermöglichen.

Generell kann der Magnetfeldsensor am oder im Rahmen des Zweirads angeordnet sein. Er kann jedoch auch auf andere Art und Weise im Wesentlichen starr mit dem Rahmen gekoppelt sein, indem der Magnetfeldsensor an einer am Rahmen befestigten Komponenten angeordnet ist. Denkbar ist hier beispielsweise ein Motor am Zweirad, mit dem das Zweirad zumindest teilweise antreibbar ist. Der Motor kann dabei im Bereich der Tretkurbel angebracht sein, so dass ein Magnetfeldsensor im Inneren des Motors oder am Gehäuse möglichst nah zum Rad, z.B. dem Hinterrad bzw. dem Laufrad angeordnet ist. Dadurch wird ermöglicht, dass der Magnet im Rad bei der Drehung des Rads möglichst nahe am Magnetfeldsensor vorbei kommt, um eine gute Messsignalauflösung zu erhalten.

Der Magnet ist vorteilhafterweise im Außenbereich des Rades untergebracht, z.B. am oder im Mantel. Alternativ kann der Magnet aber auch an der Felge angebracht oder integriert sein.

Besonders Vorteilhaft ist der Magnet mit seiner Nord-Süd-Ausrichtung radial nach außen am Rad angebracht. Hierdurch liegt ein möglichst starkes nach außen gerichtetes Magnetfeld vor, welches vom Magnetfeldsensor besonders gut erfasst werden kann. Alternativ kann der Magnet mit seiner Nord-Süd-Ausrichtung auch in Umfangsrichtung des Rades angeordnet sein.

Das Zweirad, welches mit dem erfindungsgemäßen Verfahren ausgestattet ist, kann beispielsweise ein Elektrofahrrad sein, bei dem der Motor nur unterstützend tätig ist.

Weitere Vorteile ergeben sich aus der nachfolgenden Beschreibung von Ausführungsbeispielen bzw. aus den abhängigen Patentansprüchen.

### Kurze Beschreibung der Zeichnungen

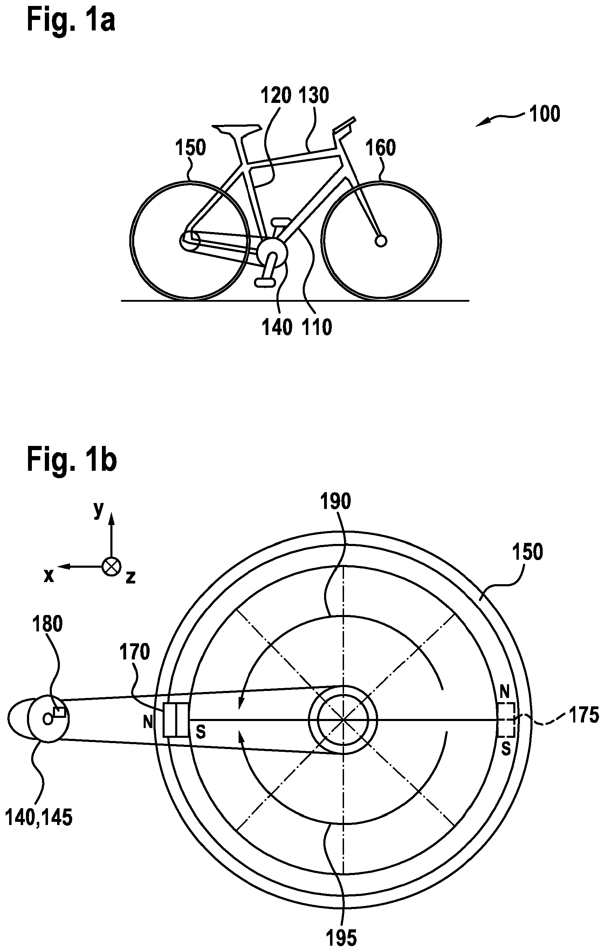

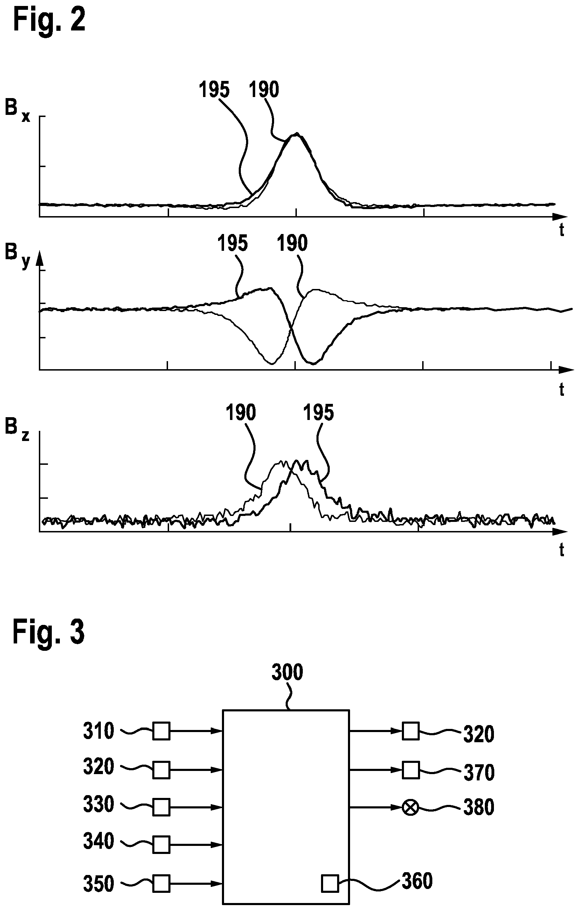

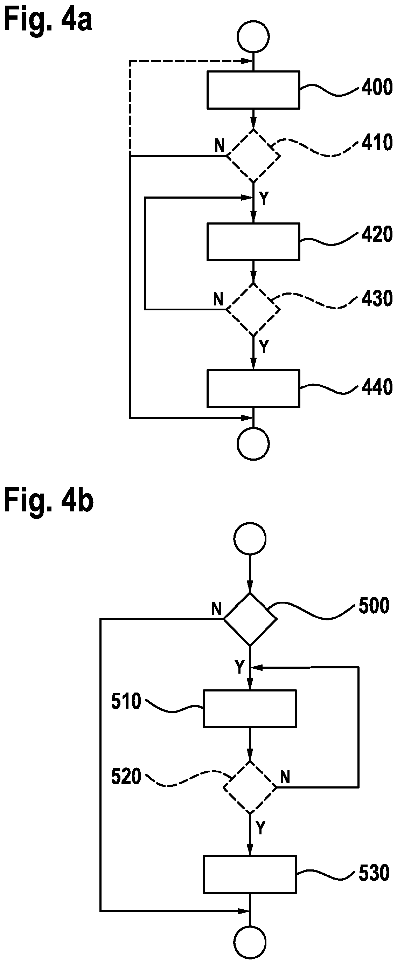

Figur 1a zeigt ein Zweirad, an dem die Erfindung eingesetzt werden kann. Mit der Figur 1b wird eine Detailansicht des Zweirads dargestellt. Die Diagramme der Figur 2 zeigen beispielhaft die erfassten Magnetfeldsensorsignale in den drei Raumrichtungen. In der Figur 3 ist eine Vorrichtung abgebildet, mit der das erfindungsgemäße Verfahren durchgeführt werden kann. Mit den Figuren 4a und b werden beispielhaft zwei mögliche Ausführungsbeispiele des erfindungsgemäßen Verfahrens mittels jeweils einem Flussdiagramm gezeigt.

### Ausführung der Erfindung

Die vorliegende Erfindung stellt eine Technologie zur Verfügung, um die Drehrichtung eines Rades eines Zweirads festzustellen bzw. zu bestimmen. Aus dieser Drehrichtung des wenigstens einen Rads des Zweirads kann im Folgenden die Bewegungsrichtung des Zweirads abgeleitet werden. Diese Information kann dann für weitere Auswerte- oder Steuerverfahren zur Verfügung gestellt oder als Grundlage heran gezogen werden.

In der Figur 1a ist beispielhaft ein Fahrrads 100 als Zweirad dargestellt, an dem die Erfindung gezeigt werden soll. Darüber hinaus kann die Erfindung auch an jedem anderen Zweirad, z.B. einem Motorrad oder einem Elektrofahrrad angewandt werden. Es ist sogar möglich, das Verfahren an einem einachsigen zweirädrigen Fahrzeug anzuwenden, z.B. einem Segway. Der Einsatz bei einem Kraftfahrzeug, z.B. einem Pkw oder Lkw ist ebenfalls möglich.

Das Fahrrad 100 gemäß der Figur 1a ist mit einem Rahmen, bestehend aus Unterrohr 110, Sattelrohr 120 und Oberrohr 130 ausgestattet. Weiterhin weist es eine Tretkurbeleinheit 140 auf, die ein Hinterrad 150 als Antriebs- oder auch Laufrad antreibt. Das Vorderrad 160 dient über den Lenker als Steuerrad, um die Richtung der Bewegung des Fahrrads vorzugeben.

In der Figur 1b ist beispielhaft das Hinterrad 150 mit der Tretkurbeleinheit 140 dargestellt, um die Funktionsweise der Erfindung deutlich zu machen. Statt einer einfachen Tretkurbeleinheit 140, bei der lediglich der Radfahrer den Antrieb des Fahrrads mittels der Betätigung der Tretkurbeln aufbringt, kann auch eine Motoreinheit 145 vorgesehen sein, die ganz oder teilweise den Antrieb bzw. Vortrieb des Fahrrads mittels Motorkraft erzeugt. Diese Motoreinheit 145 kann jedoch auch an einer anderen Stelle des Rahmens oder des Fahrradaufbaus angeordnet sein. Denkbar sind hier insbesondere Vorderrad- oder Hinterradantriebe sowie eine Unterbringung im Rahmen. Am Hinterrad 150 ist wenigstens ein Magnet 170 angeordnet, der sich bei der drehenden Bewegung des angetriebenen Rades mit dreht. In einer ersten Varianten ist der Magnet 170 mit seiner Nord-Süd-Richtung radial nach außen am Hinterrad 150 befestigt. Der Vorteil bei dieser Anordnung besteht darin, dass ein größeres Magnetfeld radial nach Außen erzeugt wird, welches vom Magnetsensor 180 deutlicher erfasst werden kann. Die konkrete Ausrichtung des Nordpols oder des Südpols nach außen spielt für das erfindungsgemäße Verfahren jedoch keine Rolle. In einer zweiten, alternativen Varianten kann der Magnet 175 mit seiner Nord-Süd-Richtung auch in Umfangsrichtung angeordnet werden. Generell sollte der Magnet 170 bzw. 175 im äußeren Bereich des Hinterrads 150 angeordnet sein. Dies kann dadurch realisiert werden, dass der Magnet 170 bzw. 175 am oder im Mantel untergebracht ist. Alternativ kann der Magnet 170 bzw. 175 jedoch auch an oder in der Felge angebracht sein. Letzteres hätte den Vorteil, dass der Magnet einem geringeren Verschleiß unterliegt, da er gegenüber der Fahrbahn und der Verwalkung des Mantels geschützt ist. Optional kann vorgesehen sein, mehrere Magnete 170 bzw. 175 im oder am Hinterrad unterzubringen. Hierdurch kann schneller auf die Drehrichtung geschlossen werden, da kein vollständiger Umlauf des Hinterrads 150 notwendig ist. Voraussetzung ist hierbei jedoch, dass die Magnete 170 bzw. 175 in gleicher Nord-Süd-Ausrichtung eingebaut werden.

Der Magnetsensor 180, mit dem die Bewegung des Magnets 170 bzw. 175 über die Änderungen dessen Magnetfelds bei einer Vorwärtsbewegung 190 oder einer Rückwärtsbewegung 195 erfasst wird, kann an unterschiedlichen Stellen am Zweirad bzw. Fahrrad 100 untergebracht, d.h. gekoppelt sein. Zur Erfassung des veränderten Magnetfelds ist eine Anordnung möglichst nahe am Hinterrad 150 zu empfehlen. So kann der Magnetsensor 180 im Bereich der Tretkurbeleinheit 140 aber auch am oder im Gehäuse des Motors 145 angebracht oder integriert sein. Daneben besteht jedoch auch die Möglichkeit, den Magnetsensor 180 an einem anderen Teil des Fahrrads, z.B. dem Rahmen, insbesondere am Unterrohr 110, am Gepäckträger, am Akkumulator oder an der Hinterradspeiche zu befestigen. Der Magnetsensor 180 kann dabei derart gestaltet sein, dass er alle drei Raumrichtungen Bx, By und Bz erfassen kann. Zur Ableitung der Drehrichtungsinformation aus der Bewegung des Magneten 170 bzw. 175 am Laufrad ist jedoch die Erfassung wenigstens der By-Komponenten, d.h. einer Magnetfeldkomponenten zur Hochachse des Fahrrads notwendig. Alternativ kann bei einer Anordnung des Magneten 170 bzw. 175 mit seiner Polarisation entlang des Umfangs des Rads auch die Erfassung der Magnetfeldkomponenten Bx, d.h. in Fahrtrichtung, ausreichend sein, um auf die Drehrichtungsinformation schließen zu können.

In den Diagrammen der Figur 2 sind typische Messsignalverläufe der Magnetfeldsensorsignale der drei Raumrichtungen x, y und z dargestellt. Die x-Richtung stellt dabei die Richtung dar, in der sich das Fahrrad vorwärts bewegt. Wie bereits erwähnt, repräsentiert die y-Richtung die Hochachse des Fahrrads, während die z-Achse die Querachse abbildet. Wie bereits ausgeführt, ist für die Erfindung wesentlich, die By-Komponente zu erfassen, bei der sich im mittleren Diagramm der Figur 2 im Zeitverlauf bei einer Vorwärtsbewegung 190 eine gegenüber der Rückwärtsbewegung 195 spiegelbildlich unterschiedliche Messwerterfassung ergibt. Dies liegt darin, dass die Magnetfeldlinien unterschiedlichen gerichtet sind und somit einen gegenpoligen Sensorwert erzeugen. Aus der zusätzlichen Information, dass sich das Fahrzeug nach vorne oder nach hinten bewegt, lässt sich somit eine eindeutige Zuordnung des Messwertsignals zu einer Drehrichtung und damit einer Bewegungsrichtung des Fahrrads erzeugen. Die Bx-Komponente im ersten Diagramm zeigt gegenüber der By-Komponente lediglich die Annäherung bzw. die Entfernung des Magneten 170 bzw. 175 vom Magnetfeldsensor 180 an. Die Erfassung der Bz-Komponenten zeigt im unteren Diagramm einen Versatz zwischen der Vorwärtsbewegung 190 und der Rückwärtsbewegung 195. Dieser Versatz ist auf die Einbauposition des Magnetfeldsensors 180 am Motor 145 zurückzuführen. Eine Auswertung dieser Information für die vorliegenden Erfindung ist nicht erforderlich.

Aus der Kenntnis des zeitlichen Verlaufs der Magnetfeldsensorsignale in den drei Raumrichtungen lässt sich erkennen, dass eine Erfassung des Magnetfeld in y-Richtung für die Erfindung ausreichend ist. Dementsprechend kann ein kostengünstiger Magnetfeldsensor 180 gewählt werden, der nur auf eine Raumrichtung empfindlich genug ist.

Mit der Figur 3 wird eine Vorrichtung 300 gezeigt, z.B. eine Verarbeitungseinheit oder eine Steuereinheit, die aus den erfassten Sensordaten eine Drehrichtungsinformation ableitet. Hierzu werde in der Vorrichtung 300, die typischerweise eine Recheneinheit und einen Speicher 360 aufweist, die Sensorsignale des Magnetfeldsensors 310 bzw. 180 eingelesen. Weiterhin ist für das erfindungsgemäße Verfahren erforderlich, dass die Vorrichtung 300 eine Information darüber erhält, dass sich das Fahrrad bewegt bzw. in welcher Richtung es sich bewegt. Hierzu können interne Informationen herangezogen oder extern abgefragt werden. So ist denkbar, dass eine Information über die Tätigkeit einer Antriebseinheit 320 (bzw. des Motors 145 gemäß der Figur 1b) erfasst wird. Indem erfasst wird, dass sich die Antriebseinheit 320 im regulären Antriebsmodus befindet, kann davon ausgegangen werden, dass sich das Fahrrad vorwärts bewegt. Entsprechend kann auch eine Information über eine Betätigung der Antriebseinheit 320 bei einem Rückwärtsfahren dazu genutzt werden, die Bewegungsrichtung der erfassten Messsignale zuzuordnen. Darüber hinaus können noch weitere Informationen erfasst werden, die für die weitere Auswertung oder eine Steuerung/Regelung in Abhängigkeit der erfassten Drehrichtungsinformation hilfreich sind. So kann die manuelle oder elektrische Betätigung eines Start- bzw. Initiierungsbutton 330 erfasst werden. Optional können ebenfalls zusätzliche Sensorsignale von einem Lenkwinkelsensor 340 oder einem Beschleunigungssensor 350 erfasst werden.

Nach der Erfassung der Bewegungsrichtung und der Auswertung der Magnetfeldsensorsignale in einer definierten Einlernphase, kann diese Zuordnung für spätere Auswertungen und Vergleiche in dem Speicher 360 abgelegt werden. So können anschließend die erneut erfassten Magnetfeldsensorsignale des Magnetfeldsensors 310 ohne zusätzliche Bewegungsinformationen dazu genutzt werden, die Drehrichtung des Hinterrads 150 sowie die Bewegungsrichtung des Fahrrads zu erkennen. Diese Information kann dazu genutzt werden, verschiedene Komponenten 370 des Fahrrads anzusteuern oder zu optimieren. Auch eine Ausgabe über eine Anzeige 380 ist möglich.

In einer Ausführungsform der Erfindung kann vorgesehen sein, dass die Einlernphase gezielt vom Fahrer oder einem im Fahrrad befindlichen System gestartet bzw. iniitiert wird. Hierzu kann die Antriebseinheit 320 gezielt angesteuert werden, um eine Vorwärtsbewegung 190 zu erzeugen. Entsprechend könnte hier auch eine gezielte Rückwärtsbewegung gestartet werden.

Gemäß der Figur 4a soll im Folgenden ein erstes Ausführungsbeispiel des erfindungsgemäßen Verfahrens beschrieben werden, welches beispielsweise in der Vorrichtung 300 ablaufen kann. Hierzu wird nach dem Start des Verfahrens in einem ersten Schritt 400 die Antriebseinheit 320 mit dem Ziel gestartet, eine bevorzugte Fortbewegungsrichtung zu erzeugen, z.B. einer Vorwärtsfahrt. Anschließend werden im nächsten Schritt 420 die Sensorsignale des Magnetfeldsensors 310 erfasst. Hier kann vorgesehen sein, dass dieser Schritt so lange ausgeführt wird, bis genügend auswertbare Daten vorliegen, z.B. über einen kompletten Umlauf des Hinterrads. Optional kann ein nachfolgender weiterer Schritt 430 vorgesehen sein, bei dem überprüft wird, ob genügend Sensordaten vorliegen, um eine Zuordnung zur Drehrichtung treffen zu können.

Falls nicht, wird der Schritt 420 erneut durchlaufen. Mit dem nächsten Schritt 440 wird eine Zuordnung der Drehrichtung zu dem erfassten zeitlichen Verlauf der Magnetfeldsensorsignale durchgeführt. Diese Information wird für weitere Verarbeitungsschritte abgespeichert oder anderen Steuer- oder Regelungssystemen zur Verfügung gestellt, bevor das Verfahren beendet wird. Durch die Festlegung der Drehrichtung in Abhängigkeit der erfassten Magnetfeldsensorsignale kann anschließend ohne die Erfassung der Bewegung auf die Richtung geschlossen werden, in der sich das Fahrrad bewegt.

Optional kann in diesem Ausführungsbeispiel auch ein weiterer Schritt 410 nach dem Starten der Antriebseinheit 320 im Schritt 400 eingefügt werden. In diesem Schritt wird explizit die Bewegung des Fahrrads erfasst und das Verfahren mit Schritt 420 nur fortgeführt, wenn sich das Fahrrad auch tatsächlich bewegt. Diese Abfrage kann dabei erkennen, ob das Fahrrad sich tatsächlich in einem Fortbewegungsmodus befindet und nicht z.B. für Wartungszwecke aufgebockt ist.

Die Figur 4b zeigt ein zweites Ausführungsbeispiel des erfindungsgemäßen Verfahrens, bei dem die Einlernphase während des normalen Betriebs des Fahrrads durchgeführt werden kann. Hierbei wird nach dem Start des Verfahrens in einem ersten Schritt 500 überprüft, ob die Antriebseinheit 320 überhaupt in Betrieb ist. Falls dies nicht der Fall ist, wird das Verfahren beendet. Entsprechend des Schritts 420 bzw. des optionalen Schritts 430 werden in den nachfolgenden Schritten 510 und 520 die Magnetfeldsensorsignale erfasst, die zu einer Zuordnung der Drehrichtung erforderlich sind. Der nächste Schritt 530 entspricht in diesem Ausführungsbeispiel dem Schritt 440, in dem den erfassten zeitabhängigen Magnetfeldsensorsignalen eine Drehrichtung zugeordnet und diese Information abgespeichert wird.

Generell kann so nach der Einlernphase eine Drehrichtungszuordnung herangezogen werden, um alleine auf der Basis weiterer zeitaufgelöster Magnetfeldsensorsignale die Bewegungsrichtung des Fahrrads zu erkennen. Diese daraus dann abgeleitete Drehrichtungsinformation kann anschließend für verschiedene Steuer- und/oder Regelungsverfahren verwendet werden. Es ist jedoch auch möglich, basierend auf dieser Drehrichtungsinformation eine für das Fahrrad untypische Rückwärtsfahrt zu erkennen, um gegebenenfalls Gegenmaßnahmen einzuleiten, z.B. die Aktivierung einer Bremse bei der Vermutung eines Hangabtriebs. Weiterhin kann diese Drehrichtungsinformation und damit die Erkennung der Bewegungsrichtung in Abhängigkeit alleine von den Magnetfeldsensorsignalen für Navigationszwecke oder Streckenaufzeichnungen verwendet werden. Hierzu kann sinnvoll sein, weitere Informationen zu erfassen, z.B. GPS-Daten, Sensordaten eines Lenkwinkelsensors oder einer Geschwindigkeit. Die Drehrichtungsinformation kann auch dazu genutzt werden, um anderweitige Geschwindigkeitserfassungen zu überprüfen, um so Manipulationen oder falsche Werte zu erkennen.

In einem weiteren Ausführungsbeispiel wird aus den erfassten Magnetfeldsensorsignalen zusätzlich zur Drehrichtung auch noch direkt die Drehgeschwindigkeit des überwachten Rades und gegebenenfalls mit der Kenntnis über den Radumfang daraus abgeleitet die Geschwindigkeit des Zweirads, zum Beispiel eines Elektrofahrrads ermittelt. Hierzu werden aufeinander folgende Magnetfeldsensorsignale verwendet, die durch den wenigstens einen Magneten 160 bzw. 170 im überwachten Rad im Magnetfeldsensorelement 180 erzeugt werden. Sind mehrere Magnete im Rad angeordnet, ist nur eine Teilumdrehung des Rades notwendig, um die Drehgeschwindigkeit abzuleiten. Vorteilhafterweise werden die Magnete dabei gleichmäßig entsprechend der Radumfangsfläche verteilt. Eine derartige Verteilung hat auch den Vorteil, dass Änderungen in der Drehgeschwindigkeit zu jedem Zeitpunkt schneller erkannt werden können, da kein vollständiger Umlauf des Rades erforderlich ist. Zur korrekten Auswertung der Zeitabstände zwischen den Magnetfeldsensorsignalen ist jedoch erforderlich, dass die Auswerteeinheit, z.B. die Vorrichtung 300, Zugriff auf die Anzahl, den Anbringungsort am Rad sowie den Umfang des Rades hat. Derartige Daten können im Speicher 360 abgelegt sein und gegebenenfalls auch durch den Fahrer eingebbar gestaltet sein.

Die erfassten Magnetfeldsensorsignale können zusätzlich auch hinsichtlich ihres zeitlichen Verhaltens dazu verwendet werden, die Drehgeschwindigkeit des Rades und daraus die Geschwindigkeit des Zweirads zu abzuleiten. So kann bei der Kenntnis der Umfangsbreite des wenigstens einen Magneten aus der Signalbreite der Magnetfeldsensorsignale ein Maß für die Drehgeschwindigkeit abgeleitet werden. Hierbei kann vorgesehen sein, dass ein Schwellenwert vorgesehen ist, der bei Überschreiten das Vorliegen eines Magnetfeldsensorsignals in Abhängigkeit des Durchgangs des Magneten in Erfassungsreichweite anzeigt. Entsprechend kann der gleiche Schwellenwert verwendet werden, um bei einem nachfolgenden Unterschreiten das Heraustreten des Magneten aus dem Erfassungsbereich anzeigt. Aus der zeitlichen Differenz beider Schwellwertvergleiche kann so in Abhängigkeit von der Umfangslänge des Magneten auf die Drehgeschwindigkeit geschlossen werden. Hierzu können zusätzlich noch der geringste Abstand zwischen Magnet und Magnetfeldsensor als auch der Reifenumfang herangezogen werden.

Optional kann auch vorgesehen sein, dass die Schwellenwerte zur Feststellung des Erreichens und des Verlassen der Erfassungsreichweite unterschiedlich ausgestaltet sind. So ist beispielsweise anhand der Magnetfeldsignale By in Figur 2 deutlich erkennbar, dass je nach Ausrichtung des Magneten am oder im Rad unterschiedliche Schwellenwerte gewählt werden müssen. Bei der Verwendung der Bx- oder Bz-Komponenten des Magnetfeldsensorsignals kann dagegen jeweils ein einheitlicher Schwellenwert Festlegung der Zeitdauer im Erfassungsbereich ausreichen.

Die Schwellenwerte können fest gewählt oder in Abhängigkeit von den Eigenschaften des verwendeten Magneten, den Eigenschaften des Magnetfeldsensor, dem maximalen Wert der erfassten Magnetfeldstärke und/oder dem Abstand zwischen Magnet bzw. Hinterrad und Magnetfeldsensor eingestellt werden.

Mit der Erfassung der Signalbreite der Magnetfeldsignale können bei der Verwendung jeweils eines Magneten zwei unterschiedliche Geschwindigkeitserfassungen während eines Umlaufs realisiert werden. Neben der üblichen (langsamen) Drehbewegungserfassung durch die Sensorsignalerfassung nach einem vollständigen Umlauf ergibt sich so auch eine (schnelle) Drehbewegungserfassung während sich der eine Magnet in der Erfassungsreichweite des Magnetfeldsensors befindet. Werden mehrere Magnete in dem Rad angeordnet, kann somit die Erfassungszeit für die Drehgeschwindigkeit des Rades bzw. die Fortbewegungsgeschwindigkeit des Zweirads deutlich erhöht werden.

## Patentansprüche

1. Verfahren zur Bestimmung der Drehrichtung eines Rades (150) eines Zweirads (100) mit einem Motor, insbesondere eines Fahrrads, wobei das Zweirad (100) einen mit dem Rahmen (110, 120,130, 140) gekoppelten Magnetfeldsensor (180) und ein Rad (150) mit einem Magneten (170, 175) aufweist, wobei
• in einem Einlernvorgang
o eine Information über die Bewegung und die Bewegungsrichtung des Zweirads (100) durch die Ansteuerung des Motors in Vorwärtsrichtung oder Rückwärtsrichtung bereitgestellt wird, und
∘ erste Magnetfeldsensorsignale des Magneten (170, 175) erfasst werden, welche die Drehbewegung des Rades (150) in Abhängigkeit der Bewegung des Zweirads (100) repräsentieren, wobei die ersten Magnetfeldsensorsignale eine Magnetfeldkomponente By in Richtung der Hochachse (y) oder eine Magnetfeldkomponente Bx in Fahrtrichtung umfassen und
∘ eine Zuordnung der ersten Magnetfeldsensorsignale zu einer Drehrichtung in Abhängigkeit der Bewegungsrichtung abgespeichert wird, und
• nach dem Einlernvorgang in einer Drehrichtungszuordnung
∘ zweite Magnetfeldsensorsignale des Magneten (170, 175) erfasst werden, wobei die zweiten Magnetfeldsensorsignale eine Magnetfeldkomponente By in Richtung der Hochachse (y) bzw. eine Magnetfeldkomponente Bx in Fahrtrichtung umfassen, und
∘ eine Drehrichtungsinformation und eine Information über die Bewegungsrichtung des Zweirads in Abhängigkeit von einem Vergleich der ersten und zweiten Magnetfeldsensorsignale erzeugt wird.

2. Verfahren nach Anspruch 1, **dadurch gekennzeichnet, dass** das Zweirad (100) einen Motor (145, 320) zur Erzeugung eines Vortriebs des Zweirads (100) aufweist, wobei während der Erfassung der ersten Magnetfeldsensorsignale der Motor (145, 320) zur Erzeugung des Vortriebs angesteuert wird.

3. Verfahren nach Anspruch 1 oder 2, **dadurch gekennzeichnet, dass** lediglich die Magnetfeldkomponente in einer Richtung des Zweirads (100), insbesondere die Magnetfeldkomponente (By) in Richtung der Hochachse (y), für die ersten und zweiten Magnetfeldsensorsignale erfasst werden.

4. Verfahren nach einem der vorherigen Ansprüche, **dadurch gekennzeichnet, dass** eine Geschwindigkeitsinformation, welche die Fortbewegung des Zweirads (100) repräsentiert, in Abhängigkeit der Drehrichtung erzeugt wird.

5. Vorrichtung (300) zur Bestimmung der Drehrichtung eines Rades (150) eines Zweirads (100) mit einem Motor, insbesondere eines Fahrrads, wobei das Zweirad (100) einen mit dem Rahmen (110, 120, 130, 140) gekoppelten Magnetfeldsensor (180, 310) und ein Rad (150) mit einem Magneten (170, 175) aufweist, wobei die Vorrichtung (300) dazu ausgebildet ist, ein Verfahren gemäß einem der Ansprüche 1 bis 4 durchzuführen.

6. Vorrichtung (300) nach Anspruch 5, **dadurch gekennzeichnet, dass** das Zweirad einen am oder im Rahmen (110, 120,130, 140) angeordneten Motor (145, 320) zur Erzeugung eines Vortriebs des Zweirads (100) aufweist, wobei die Vorrichtung (300) so ausgebildet ist, dass sie während der Erfassung der ersten Magnetfeldsensorsignale den Motor (145, 320) zur Erzeugung eines Vortriebs ansteuert.

7. Vorrichtung (300) nach Anspruch 5 oder 6, **dadurch gekennzeichnet, dass** die Vorrichtung (300) so ausgebildet ist, dass sie lediglich die Magnetfeldkomponente in einer Richtung des Zweirads (100), insbesondere die Magnetfeldkomponente (By) in Richtung der Hochachse (y), für die ersten und zweiten Magnetfeldsensorsignale erfasst.

8. Vorrichtung (300) nach einem der Ansprüche 5 bis 7, **dadurch gekennzeichnet, dass** die Vorrichtung (300) so ausgebildet ist, dass sie eine Geschwindigkeitsinformation, welche die Fortbewegung des Zweirads (100) repräsentiert, in Abhängigkeit der Drehrichtung erzeugt.

9. Zweirad (100) mit einer Vorrichtung nach Anspruch 5, **dadurch gekennzeichnet, dass** der Magnet im oder an einem Reifenmantel oder an oder in einer Felge angeordnet ist.

10. Zweirad (100) nach Anspruch 9, **dadurch gekennzeichnet, dass** das Zweirad (100) einen am oder im Rahmen (110, 120,130, 140) angeordneten Motor (145, 320) zur Erzeugung eines Vortriebs des Zweirads (100) aufweist, wobei die Zweirad (100) oder die Verarbeitungseinheit so ausgebildet ist, dass es bzw. sie während der Erfassung der ersten Magnetfeldsensorsignale den Motor (145, 320) zur Erzeugung eines Vortriebs ansteuert.

11. Zweirad (100) nach einem der Ansprüche 9 oder 10, **dadurch gekennzeichnet, dass** der Magnetfeldsensor (180, 310) im oder am Motor (145, 320) angeordnet ist.

12. Zweirad (100) nach einem der Ansprüche 9 bis 11, **dadurch gekennzeichnet, dass** der Magnet (170, 175) im Außenbereich des Rades (150) untergebracht ist, insbesondere in oder an der Felge.

13. Zweirad (100) nach einem der Ansprüche 9 bis 12, **dadurch gekennzeichnet, dass** der die Ausrichtung des Magneten (170, 175) radial erfolgt.

## Claims

1. Method for determining the direction of rotation of a wheel (150) of a two-wheeled vehicle (100) having a motor, in particular of a bicycle, the two-wheeled vehicle (100) having a magnetic field sensor (180), which is coupled to the frame (110, 120, 130, 140), and a wheel (150) having a magnet (170, 175), wherein
• a learning process comprises
○ providing information about the movement and the direction of movement of the two-wheeled vehicle (100) by driving the motor in the forward direction or in the reverse direction, and
○ detecting first magnetic field sensor signals from the magnet (170, 175), which represent the rotational movement of the wheel (150) on the basis of the movement of the two-wheeled vehicle (100), the first magnetic field sensor signals comprising a magnetic field component By in the direction of the vertical axis (y) or a magnetic field component Bx in a direction of travel, and
○ storing an association between the first magnetic field sensor signals and a direction of rotation on the basis of the direction of movement, and,
after the learning process, a direction-of-rotation association comprises
○ detecting second magnetic field sensor signals from the magnet (170, 175), the second magnetic field sensor signals comprising a magnetic field component By in the direction of the vertical axis (y) or a magnetic field component Bx in the direction of travel, and
○ producing direction-of-rotation information and information about the direction of movement of the two-wheeled vehicle on the basis of a comparison of the first and second magnetic field sensor signals.

2. Method according to Claim 1, **characterized in that** the two-wheeled vehicle (100) has a motor (145, 320) for producing a propulsion for the two-wheeled vehicle (100), the motor (145, 320) being driven to produce the propulsion during the detection of the first magnetic field sensor signals.

3. Method according to Claim 1 or 2, **characterized in that** only the magnetic field component in one direction of the two-wheeled vehicle (100), in particular the magnetic field component (By) in the direction of the vertical axis (y), is detected for the first and second magnetic field sensor signals.

4. Method according to one of the preceding claims, **characterized in that** speed information representing the progressive movement of the two-wheeled vehicle (100) is produced on the basis of the direction of rotation.

5. Apparatus (300) for determining the direction of rotation of a wheel (150) of a two-wheeled vehicle (100) having a motor, in particular of a bicycle, the two-wheeled vehicle (100) having a magnetic field sensor (180, 310), which is coupled to the frame (110, 120, 130, 140), and a wheel (150) having a magnet (170, 175), wherein the apparatus (300) is designed to carry out a method according to one of Claims 1 to 4.

6. Apparatus (300) according to Claim 5, **characterized in that** the two-wheeled vehicle has a motor (145, 320), which is arranged on or in the frame (110, 120, 130, 140), for producing a propulsion for the two-wheeled vehicle (100), the apparatus (300) being designed such that it drives the motor (145, 320) to produce a propulsion during the detection of the first magnetic field sensor signals.

7. Apparatus (300) according to Claim 5 or 6, **characterized in that** the apparatus (300) is designed such that it detects only the magnetic field component in one direction of the two-wheeled vehicle (100), in particular the magnetic field component (By) in the direction of the vertical axis (y), for the first and second magnetic field sensor signals.

8. Apparatus (300) according to one of Claims 5 to 7, **characterized in that** the apparatus (300) is designed such that it produces speed information representing the progressive movement of the two-wheeled vehicle (100) on the basis of the direction of rotation.

9. Two-wheeled vehicle (100) having an apparatus according to Claim 5, **characterized in that** the magnet is arranged in or on a tyre casing or on or in a rim.

10. Two-wheeled vehicle (100) according to Claim 9, **characterized in that** the two-wheeled vehicle (100) has a motor (145, 320), which is arranged on or in the frame (110, 120, 130, 140), for producing a propulsion for the two-wheeled vehicle (100), the two-wheeled vehicle (100) or the processing unit being designed such that it drives the motor (145, 320) to produce a propulsion during the detection of the first magnetic field sensor signals.

11. Two-wheeled vehicle (100) according to either of Claims 9 and 10, **characterized in that** the magnetic field sensor (180, 310) is arranged in or on the motor (145, 320).

12. Two-wheeled vehicle (100) according to one of Claims 9 to 11, **characterized in that** the magnet (170, 175) is accommodated in the outer region of the wheel (150), in particular in or on the rim.

13. Two-wheeled vehicle (100) according to one of Claims 9 to 12, **characterized in that** the magnet (170, 175) is aligned radially.

## Revendications

1. Procédé de détermination de la direction de rotation d'une roue (150) d'un deux-roues (100) équipé d'un moteur, notamment d'une bicyclette, dans lequel le deux-roues (100) comporte un capteur de champ magnétique (180) accouplé au cadre (110, 120, 130, 140) et une roue (150) munie d'un aimant (170, 175), dans lequel
• au cours d'un processus d'apprentissage
o une information concernant le mouvement et la direction de déplacement du deux-roues (100) est fournie par la commande du moteur dans la direction avant ou arrière, et
o des premiers signaux de capteurs de champ magnétique de l'aimant (170, 175) sont détectés, lesquels représentent le mouvement de rotation de la roue (150) en fonction du mouvement du deux-roues (100), dans lequel les premiers signaux de capteurs de champ magnétique comprennent une composante de champ magnétique By dans la direction de l'axe vertical (y) ou une composante de champ magnétique Bx dans la direction de déplacement et
o une association des premiers signaux de capteurs de champ magnétique à une direction de rotation est mémorisée en fonction de la direction de déplacement, et
• après le processus d'apprentissage, au cours d'une association de direction de rotation,
o des deuxièmes signaux de capteurs de champ magnétique de l'aimant (170, 175) sont détectés, dans lequel les deuxièmes signaux de capteurs de champ magnétique comprennent une composante de champ magnétique By dans la direction de l'axe vertical (y) ou une composante de champ magnétique Bx dans la direction de déplacement, et
o une information de direction de rotation et une information concernant la direction de déplacement du deux-roues sont générées en fonction d'une comparaison des premier et deuxième signaux de capteurs de champ magnétique.

2. Procédé selon la revendication 1, **caractérisé en ce que** le deux-roues (100) comporte un moteur (145, 320) destiné à produire une propulsion du deux-roues (100), dans lequel, pendant la détection des premiers signaux de capteurs de champ magnétique, le moteur (145, 320) est commandé de manière à générer la propulsion.

3. Procédé selon la revendication 1 ou 2, **caractérisé en ce que** seule la composante de champ magnétique orientée dans une direction du deux-roues (100), notamment la composante de champ magnétique (By) orientée dans la direction de l'axe vertical (y), est détectée pour les premier et deuxième signaux de capteurs de champ magnétique.

4. Procédé selon l'une des revendications précédentes, **caractérisé en ce qu'**une information de vitesse qui représente le déplacement du deux-roues (100) est générée en fonction de la direction de rotation.

5. Dispositif (300) de détermination de la direction de rotation d'une roue (150) d'un deux-roues (100) équipé d'un moteur, notamment d'une bicyclette, dans lequel le deux-roues (100) comporte un capteur de champ magnétique (180, 310) accouplé au cadre (110, 120, 130, 140) et une roue (150) munie d'un aimant (170, 175), dans lequel le dispositif (300) est conçu pour mettre en œuvre un procédé selon l'une des revendications 1 à 4.

6. Dispositif (300) selon la revendication 5, **caractérisé en ce que** le deux-roues comporte un moteur (145, 320) disposé sur ou dans le cadre (110, 120, 130, 140) pour générer une propulsion du deux-roues (100), dans lequel le dispositif (300) est conçu de manière à ce que, pendant la détection des premiers signaux de capteurs de champ magnétique, il commande le moteur (145, 320) afin de générer une propulsion.

7. Dispositif (300) selon la revendication 5 ou 6, **caractérisé en ce que** le dispositif (300) est conçu de manière à ce qu'il ne détecte que la composante de champ magnétique orientée dans une direction du deux-roues (100), notamment la composante de champ magnétique (By) orientée dans la direction de l'axe vertical (y), pour les premier et deuxième signaux de capteurs de champ magnétique.

8. Dispositif (300) selon l'une des revendications 5 à 7, **caractérisé en ce que** le dispositif (300) est conçu de manière à ce qu'il génère une information de vitesse qui représente le déplacement du deux-roues (100) en fonction de la direction de rotation.

9. Deux-roues (100) muni d'un dispositif selon la revendication 5, **caractérisé en ce que** l'aimant est disposé dans ou sur une carcasse de pneu ou sur ou dans une jante.

10. Deux-roues (100) selon la revendication 9, **caractérisé en ce que** le deux-roues (100) comporte un moteur (145, 320) disposé sur ou dans le cadre (110, 120, 130, 140) pour générer une propulsion du deux-roues (100), dans lequel le deux-roues (100) ou l'unité de traitement est conçu(e) de manière à ce que, pendant la détection des premiers signaux de capteurs de champ magnétique, il/elle commande le moteur (145, 320) afin de générer une propulsion.

11. Deux-roues (100) selon l'une des revendications 9 ou 10, **caractérisé en ce que** le capteur de champ magnétique (180, 310) est disposé dans ou sur le moteur (145, 320).

12. Deux-roues (100) selon l'une des revendications 9 à 11, **caractérisé en ce que** l'aimant (170, 175) est monté à l'extérieur de la roue (150), notamment dans ou sur la jante.

13. Deux-roues (100) selon l'une des revendications 9 à 12, **caractérisé en ce que** l'orientation de l'aimant (170, 175) est radiale.
